# EUROPEAN PATENT APPLICATION

(11) **EP 3 216 794 A1**
(43) Date of publication of application: **13.09.2017**
(21) Application number: 16159522.8
(22) Date of filing: 09.03.2016
(51) Int. Cl.: C07F 5/02, G21F 9/00

(54) **PROCESS FOR REMOVING RADIOACTIVE ISOTOPES FROM AQUEOUS FLUIDS BY FLUORINE CONTAINING REAGENTS, FLUORINE CONTAINING, WATER-INSOLUBLE SALTS OF THE RADIOACTIVE ISOTOPES, AND THEIR USE AS THERAPEUTIC AGENTS**

(71) Applicant: Studiengesellschaft Kohle mbH, 45470 Mülheim (DE)
(72) Inventor: Pörschke, Klaus-Richard, 45478 Mülheim (DE); Pollak, David, 40880 Ratingen (DE)

(57) **Abstract**

The present invention refers to a process for removing radioactive Cs isotopes from aqueous fluids including body fluids by fluorine containing reagents, the synthesis of fluorine containing, water-insoluble salts of said Cs isotopes and their use as therapeutic agents.

## Description

The present inventions refers to a process for removing radioactive isotopes, in particular Cs isotopes from aqueous fluids including body fluids by fluorine containing reagents, the fluorine containing, water-insoluble salts of said Cs isotopes and their use as therapeutic agents.

Various accidents in nuclear power plants (Chernobyl 1986, Fukushima 2011) have led to uncontrolled emissions of Cs-134 and Cs-137 with contaminations of water, landscape, and creature. Present state of the art remedy for humans and animals (domestic and livestock) involves administration of "insoluble Prussian blue" (PB), traded under the name Radiogardase (Supplier Heyl, Berlin, Germany). PB is Ferric hexacyanoferrate, Fe₄^{III}[Fe^{II}(CN)₆]₃.

Once a human is contaminated with Cs-137 and the compound is absorbed (orally, percutaneously, or respiratory) and distributed inside the body, excretion occurs only slowly, e.g., via urine. The "biological half-life" (retention time) of Cs-137 in the human body is around 80-100 days, with shorter times for adolescents (ca 62 days) and children (ca 42 days).

For the Radiogardase therapy, "Prussian blue insoluble" is administered at a dose of 3 g three times a day for adults and adolescents. Cesium ions are highly mobile in the body. They pass also into the bowels, but get readily re-absorbed again. With Prussian blue (PB) therapy, part of the cesium ions becomes absorbed by PB and becomes excreted with the feces. Applying PB therapy, the biological half-life of retention of cesium is reduced to approximately 26 days for adults, 30 days for adolescents, and 24 days for children.

Prussian blue itself is not absorbed by the body via the bowels to a noticeable extent. Of major importance is the absorption efficiency of PB towards Cs⁺ ions, both with respect to the binding strength and the rate of absorption by the solid.

Other materials for trapping Cs⁺ ions may involve ion exchange resins and coordination by polyether or cryptate structures.

The inventors have found an alternative method to the PB treatment which is expected to further reduce the retention time of Cs-134/137 in living bodies, thereby reducing the probability of radiation damages.

The invention is based on the surprising finding of the hydrophobicity of fluorinated phenyl rings in large anionic ligands (molecular weight of the anion >500 Dalton) in complexes. Such anions of suitable design associate with cesium ions to form cesium salts/complexes being insoluble in water.

In the prior art, a diborane-amide or amido-diborate adduct is known as such from Bochmann (Bochmann, M. Coord. Chem. Rev. 2009, 253, 2000). As outlined by Bochmann, when sodium amide and perfluorinated triphenylborane are stirred in diethyl ether, a relatively robust diborane-amide or amido-diborate adduct is formed. Bochmann has found that the anion is a truely weakly coordinating anion. No industrial applicability of said adduct with respect to pharmacy or cesium coordination has been disclosed.

According to the inventors, the insolubility of these cesium salts in water is based on
(a) said hydrophobicity of the anion,
(b) its suitable geometry to build a polymeric solid-state structure with Cs⁺, and
(c) the low solvation energy of Cs⁺ with water, as contrasted by the situation for the common alkali metals Li-K.

The inventors have reacted the perfluorinated triphenylborane amido adduct with CsF, assisted by sonication, to afford the solvent-free cesium salt. When [Na(OEt₂)₄][H₂NB₂(CₛF₅)₆] **(1)** and CsF in CH₂Cl₂ are sonicated at 40°C and the precipitated NaF and the excess of CsF are removed by filtration, a clear solution is obtained. After concentrating the solution and addition of pentane, colorless cuboid crystals of solute-free Cs[H₂NB₂(C₆F₅)₆] **(2)** separate in 74% yield in the course of several days (eq 1).

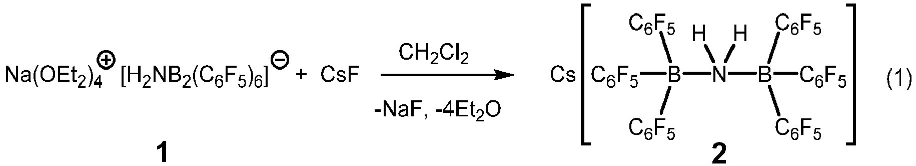

The compound shows a sharp melting point at 125°C. No obvious thermal anomaly was detected by DSC (differential scanning calorimetry). Compound **2** dissolves well in CH₂Cl₂ (*ε* = 8.9) and THF (7.6) and even in solvents of low dielectric constant such as chloroform, Et₂O, and toluene (4.9-2.4). It is only sparingly soluble in MeOH (32.7) and virtually insoluble in water (78.4) and alkanes (≤2.0). The IR spectrum of **2** contains very few bands above 1715 cm⁻¹, with weak resonances at 3375 cm⁻¹ attributable to N-H stretching vibrations. Since the cation itself does not cause any bands, the series of bands at 1648(ms), 1517(s), 1461 (vs), 1272(ms), 1082(vs), 976(vs), and 778(ms) cm⁻¹ can be seen as characteristic for the [H₂NB₂(C₆F₅)₆]⁻. The compound is exceptional for a [H₂NB₂(C₆F₅)₆]⁻ salt in that it contains a monoatomic solute-free cation. Determination of the molecular structure revealed a novel *C*₂ symmetrical conformation of the weakly coordinating [H₂NB₂(C₆F₅)₆]⁻ anion, which gives rise to an unprecedented 16-coordinate Cs⁺ cation in a likewise unprecedented tetracosahedral arrangement of F atoms. The poor solubility of Cs[H₂NB₂(C₆F₅)₆] **(2)** allows nearly quantitative separation of Cs⁺ from water which suggests potential applications as an effective Cs-134/137 remover from nuclear waste solutions, administration as an antidote for Cs-134/137 poisoning, and use for Cs-131 and Cs-137 radiotherapy (brachytherapy).

In more detail for the invention, tris(pentafluorophenyl)boran is reacted with a monoanionic salt X⁻ of a group 1 or group 2 metal cation, preferably Na⁺, Mg²⁺, or Ca²⁺, or monocationic mixed salts of the latter such as Mg(OH)⁺ or MgY⁺ (Y = halide), with X⁻ representing halide (preferably F⁻ or Cl⁻), OH⁻, or NH₂⁻. Thereby, salts M⁺[(C₆F₅)₃B-X-B(C₆F₅)₃]⁻ (M = H(OH₂)ₙ, Li, Na, K, ½Mg, MgY, Mg(OH), ½Ca, Ca(OH); X = F, Cl, OH, NH₂) (1) are formed (eq 2), which are poorly soluble in water. Cations involving Na, Mg, or Ca are particularly preferred, since biological or environmental side-effects are not to be expected. These salts show a high affinity for the Cs⁺ cation, forming insoluble Cs[XB₂(C₆F₅)₆] (2) precipitates (eq 3).

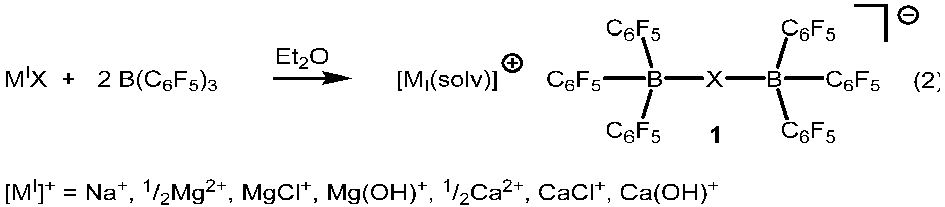

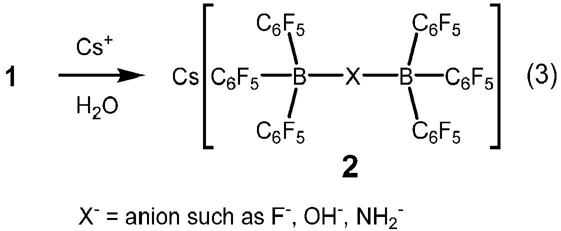

It was also found that smaller anions [B(C₆F₅)₄]⁻ and [C(C₆F₅)₃]⁻, provided in the form of similar salts [M^{I}(solv)]⁺[B(C₆F₅)₄]⁻ (3) and [M^{I}(solv)]⁺[C(C₆F₅)₃]⁻ (5) with M^{I} = H(OH₂)ₙ, Li, Na, K, ½Mg, MgY, Mg(OH), ½Ca, Ca(OH) are also suitable for precipitation of cesium ions in the forms of Cs[B(C₆F₅)₄] (4) and Cs[C(CsF₅)₃] (6) (Eq. 4 and 5).

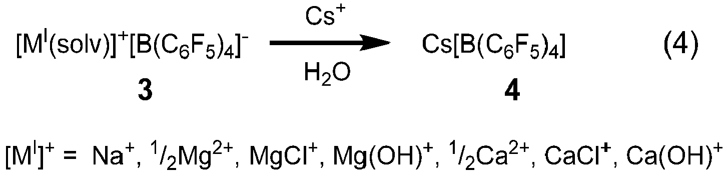

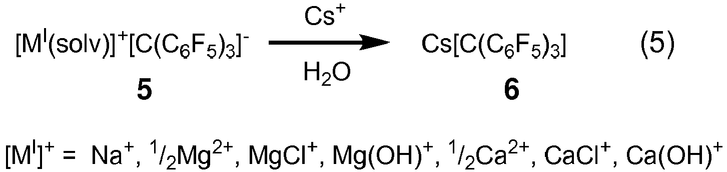

Thus, the present invention is directed to a:
- Complex of the formula [M^{I}(solv)]⁺ L⁻, wherein:
   M^{I} is selected from H(OH₂)ₙ, Li, Na, K, ½Mg, MgY, Mg(OH), ½Ca, Ca(OH),
   preferably Na, Mg or Ca, wherein Y is a halide, and
   L⁻ is selected from [B(C₆F₅)₄]⁻, [C(C₆F₅)₃]⁻ or [(C₆F₅)₃B-X-B(C₆F₅)₃]⁻,
   wherein X is selected from F⁻, OH⁻ or NH₂⁻, and
   as a pharmaceutical.

In the inventive formulae, M^{I} is intended to mean one equivalent of a metal in oxidation state one, half an equivalent of a metal in oxidation state two, or a proton solvated by water, and (solv) is intended to mean solvating ligands having O- or N-functional groups such as water, glycol, sugars, amino acids and urea, capable of coordinating to M^{I}; (solv) may also be absent in the formula.

The present invention is furthermore directed to a:
- Complex as defined above as a pharmaceutical for the treatment and/or prevention of radiation damages or as antidote for the contamination of living organism with radioactive isotopes, in particular with Cs-134 and Cs-137.
- Process for preparing a complex of the formula [M^{I}(solv)]⁺ L⁻, wherein:
   M^{I} is Cs, and
   L⁻ is selected from [B(C₆F₅)₄]⁻, [C(C₆F₅)₃]⁻ or ⁺[(C₆F₅)₃B-X-B(C₆F₅)₃]⁻,
   wherein X is selected from F⁻, OH- or NH₂⁻,
   wherein the process is comprising reacting a complex of the formula [M^{I}(solv)]⁺ L⁻, wherein:
   M^{I} is selected from H(OH₂)ₙ, Li, Na, K, ½Mg, MgY, Mg(OH), ½Ca,
   Ca(OH), preferably Na, Mg or Ca, wherein Y is a halide, and
   L- is selected from [B(C₆Fₛ)₄ [C(C₆F₅)₃]⁻ or [(C₆F₅)₃B-X-B(C₆F₅)₃]⁻,
   wherein X is selected from F⁻, OH- or NH₂⁻ and Y is a halide,
   with a Cs salt in an aqueous medium.
- Complex of the formula [M^{I}(solv)]⁺ L⁻, wherein:
   M^{I} is Cs, and
   L⁻ is selected from [B(C₆F₅)₄]⁻, [C(C₆F₅)₃]⁻ or ⁺[(C₆F₅)₃B-X-B(C₆F₅)₃]⁻, wherein X is selected from F⁻, OH- or NH₂⁻.
- Cs-Complex of the formula [M^{I}(solv)]⁺ L- as defined before, wherein M^{I} is Cs in the form of a radioactive isotope, as a pharmaceutical.
- Cs-Complex as defined before as a pharmaceutical for the treatment of tumor diseases, in particular malignant tumors.
- Cs-Complex as defined before as a pharmaceutical in the application form for use in brachytherapy.
- Use of a complex of the formula [M^{I}(solv)]⁺ L⁻, wherein:
   M^{I} is selected from H(OH₂)ₙ, Li, Na, K, ½Mg, MgY, Mg(OH), ½Ca, Ca(OH),
   preferably Na, Mg or Ca, wherein Y is a halide, and
   L⁻ is selected from [B(C₆Fₛ)₄]⁻, [C(C₆F₅)₃]⁻ or [(C₆F₅)₃B-X-B(C₆F₅)₃]⁻,
   wherein X is selected from F⁻, OH- or NH₂⁻,
   for the removal of Cs-134 and Cs-137 from aqueous liquids, in particular from radioactive waste waters.

### Examples

### Synthesis of Cs[H₂NB₂(C₆F₅)₆] (2)

All operations were performed under argon. A two-necked round bottom flask, equipped with a reflux condenser, was filled with [Na(OEt₂)₄][H₂NB₂(C₆F₅)₆] (2.72 g, 2.00 mmol), CsF (0.32 g, 2.1 mmol), and CH₂Cl₂ (50 mL). The flask was placed in an ultrasonic bath and the suspension sonicated for 14 h; by cooling the bath the temperature was kept at 40 °C. The excess of CsF and the precipitated NaF were removed by filtration and the volume of the solution was reduced to about 25 mL. Admixing pentane to the solution afforded separation of colorless crystals; yield 1.74 g (74%).
¹H NMR (CD₂Cl₂): δ 5.66 (broad, NH₂). ¹¹B NMR (CD₂Cl₂): δ-8.2 (s). ¹⁹F NMR (CD₂Cl₂): δ -132.8 (d, 2C, Fₒᵣₜₕₒ), -160.1 (t, 1C, Fₚₐᵣₐ), -165.6 ("t", 2C, Fₘₑₜₐ). ESIpos MS (CH₂Cl₂): *m*/*z* (%) = 133 ([Cs]⁺, 100). ESIneg MS (CH₂Cl₂): *m*/*z* (%) = 528 ([H₂NB(C₆F₅)₃]⁻, 2), 1040 ([H₂NB₂(C₆F₅)₆]⁻, 100).
Anal. Calcd for C₃₆H₂B₂CsF₃₀N (1172.9): C, 36.87; H, 0.17; B, 1.84; Cs, 11.33; F, 48.59; N, 1.19. Found: C, 36.77; H, 0.10; B, 1.64; Cs, 10.29; F, 47.15; N, 2.19.

### Isolation of Cs[H₂NB₂(Q₆F₅)₆] (2)

### (a) Form neat water

[Na(OEt₂)₃][H₂NB₂(C₆F₅)₆] (69.6 mg, 0.0541 mmol; *FW* = 1285.4; c ≈ 0.9 10⁻⁴ M) was dissolved in 570 mL of water. CsCl (9.5 mg, 0.0564 mmol; *FW* = 168.4) was added and after brief mixing the clear solution was left unstirred. Soon colorless crystals began to separate. The mixture was left overnight and the precipitate was isolated by filtration; yield of **2** 42.1 mg (0.0359 mmol, 66%; *FW* = 1172.9). The aqueous mother liquor was extracted once with 20 mL of CH₂Cl₂. Evaporation of the solvent gave an additional crop of 20 mg (0.0170 mmol, 32%). Total isolated yield was 62.1 mg (0.053 mmol; 98%). The IR spectra of the isolated solids were identical with that of pure Cs[H₂NB₂(C₆F₅)₆] (**2**).

### (b) Water, containing other metal salts

To a water solution (450 mL), containing the inorganic salts listed below, was added [Na(OEt₂)₃][H₂NB₂(C₆F₅)₆] (27.5 mg, 0.0214 mmol; *FW* = 1285.4; *c* ≈ 4.75 10⁻⁵ M) and the suspension was stirred overnight. A brown precipitate resulted (color presumably arising from Fe(OH)₃) which was filtered off and was washed with dichloromethane to extract **2**. The solvent of the extract was evaporated to dryness to leave a colorless residue: yield 19.2 mg of **1** (0.0163 mmol, 76%; *FW* = 1172.9), identified by comparison of the IR spectrum with that of pure **2.** The experiment showed that **2** can be isolated selectively and in relatively high yield from a dilute aqueous solution containing a variety of other cations.

**List of added inorganic salts**

| Salt | FW | mass [mg] | mass [mmol] | concentration [mol/L] |
|---|---|---|---|---|
| CsCl | 168.4 | 3.8 | 0.0226 | 5·10⁻⁵ |
| KCl | 74.6 | 138.1 | 1.85 | 4.1·10⁻³ |
| PbCl₂ | 278.1 | 121.3 | 0.436 | 1.0·10⁻³ |
| CrCl₃·6H₂O | 266.4 | 66.3 | 0.249 | 0.55·10⁻³ |
| CaCl₂ | 111 | 92.4 | 0.832 | 1.85·10⁻³ |
| FeCl₃·6H20 | 270.3 | 109.0 | 0.403 | 0.9·10⁻³ |

As illustrated before, the present invention allows various applications. Therefore, the present invention is also directed the following embodiments:
- It is claimed that salts of types **1, 3,** and **5** can be used to precipitate Cs⁺ ions from aqueous solutions, containing Cs⁺ in low concentrations (10⁻⁵ molar or lower, such as 10 ppm);
- It is claimed that such precipitation allows removal of Cs-134 and Cs-137 from radioactive waste waters in >75% yields. Extraction of such treated solutions with CH₂Cl₂, after or in place of the cesium salt precipitation, allows nearly quantitative separation of Cs-134 and Cs-137 from waste solutions;
- It is claimed that such removal is specific for cesium;
- It is claimed that in particular compounds of type **1** can be used as an antidote for Cs-134 and Cs-137 contamination of humans and animals, without uptake by the body or development of harmful side-effects (except minor effects such as constipation);
- In is claimed that the suggested therapy, in its administration regimen, corresponds largely to the PB therapy, but is more effective;
- It is claimed that compounds of type **2, 4,** and **6,** in particular those of type **2,** can be prepared containing radioactive isotopes Cs-131 and Cs-137 and that these compounds have a favorable profile for use in brachytherapy of various cancers. The advantage of such compounds is given by insolubility in water and easy preparation by precipitation from aqueous solutions.

## Claims

1. Complex of the formula [M^{I}(solv)]⁺ L⁻, wherein:
M^{I} is selected from H(OH₂)ₙ, Li, Na, K, ½Mg, MgY, Mg(OH), ½Ca, Ca(OH),
preferably Na, Mg or Ca, wherein Y is a halide, and
L⁻ is selected from [B(C₆F₅)₄]⁻, [C(C₆F₅)₃]⁻ or [(C₆F₅)₃B-X-B(C₆F₅)₃]⁻, wherein X is selected from F⁻, OH- or NH₂⁻, and
as a pharmaceutical.

2. Complex according to claim 1 as a pharmaceutical for the treatment and/or prevention of radiation damages or as antidote for the contamination of living organism with radioactive isotopes, in particular with Cs-134 and Cs-137.

3. Process for preparing a complex of the formula [M^{I}(solv)]⁺ L⁻, wherein:
M^{I} is Cs, and
L⁻ is selected from [B(C₆F₅)₄]⁻, [C(C₆F₅)₃]⁻ or ⁺[(C₆F₅)₃B-X-B(C₆F₅)₃]⁻, wherein X is selected from F⁻, OH- or NH₂⁻,
wherein the process is comprising reacting a complex of the formula [M^{I}(solv)]⁺ L⁻, wherein:
M^{I} is selected from H(OH₂)ₙ, Li, Na, K, ½Mg, MgY, Mg(OH), ½Ca,
Ca(OH), preferably Na, Mg or Ca, wherein Y is a halide, and
L⁻ is selected from [B(C₆F₅)₄]⁻, [C(C₆F₅)₃]⁻ or [(C₆F₅)₃B-X-B(C₆F₅)₃]⁻,
wherein X is selected from F⁻, OH- or NH₂⁻ and Y is a halide,
with a Cs salt in an aqueous medium.

4. Complex of the formula [M^{I}(solv)]⁺ L⁻, wherein:
M^{I} is Cs, and
L⁻ is selected from [B(C₆F₅)₄]⁻, [C(C₆F₅)₃]⁻ or ⁺[(C₆F₅)₃B-X-B(C₆F₅)₃]⁻, wherein X is selected from F⁻, OH- or NH₂⁻.

5. Complex of the formula [M^{I}(solv)]⁺ L⁻ according to claim 4,
wherein M^{I} is Cs in the form of a radioactive isotope,
as a pharmaceutical.

6. Complex according to claim 5 as a pharmaceutical for the treatment of tumor diseases, in particular malignant tumors.

7. Complex according to claim 5 as a pharmaceutical in the application form for use in brachytherapy.

8. Use of a complex of the formula [M^{I}(solv)]⁺ L⁻, wherein:
M^{I} is selected from H(OH₂)ₙ, Li, Na, K, ½Mg, MgY, Mg(OH), ½Ca, Ca(OH),
preferably Na, Mg or Ca, wherein Y is a halide, and
L⁻ is selected from [B(C₆F₅)₄]⁻, [C(C₆F₅)₃]⁻ or [(C₆F₅)₃B-X-B(C₆F₅)₃]⁻,
wherein X is selected from F⁻, OH- or NH₂⁻,
for the removal of Cs-134 and Cs-137 from aqueous liquids, in particular from radioactive waste waters.
